# EUROPEAN PATENT APPLICATION

(11) **EP 4 831 860 A1**
(43) Date of publication of application: **28.10.2026**
(21) Application number: 25772688.5
(22) Date of filing: 07.01.2025
(51) Int. Cl.: G06F 30/20

(54) **DRYING STATE PREDICTION METHOD FOR ELECTRODE SHEET AND DRYING STATE PREDICTION DEVICE FOR ELECTRODE SHEET**

(30) Priority: 20.03.2024 CN 202410323423
(71) Applicant: Contemporary Amperex Technology Co., Limited, Ningde, Fujian 352100 (CN)
(72) Inventor: WU, Liangliang, Ningde, Fujian 352100 (CN); DING, Junwei, Ningde, Fujian 352100 (CN); JIANG, Liang, Ningde, Fujian 352100 (CN)
(74) Representative: Ziebig Hengelhaupt Intellectual Property Attorneys Patentanwaltskanzlei PartGmbB
(86) International application number: PCT/CN2025/071025
(87) International publication number: WO 2025/194978

(57) **Abstract**

The present application relates to a drying state prediction method for an electrode sheet and a drying state prediction device for an electrode sheet. The drying state prediction method for an electrode sheet comprises: under a plurality of drying parameters, respectively drying electrode sheets to be predicted, wherein in the drying process, when the mass of said electrode sheets at the Nth moment and the mass of said electrode sheets at the (N-1)th moment meet a preset threshold value, said electrode sheets are dried into dry electrode sheets; obtaining electrode sheet data of said electrode sheets corresponding to different moments in the drying process, and constructing corresponding models between the moments and the electrode sheet data under the plurality of drying parameters, respectively; and determining, on the basis of the corresponding models respectively corresponding to the plurality of drying parameters, target data sets corresponding to target times under at least two of the plurality of drying parameters. Embodiments of the present application can effectively predict the drying characteristics of electrode sheets in the drying process, and can improve the prediction precision.

## Description

### CROSS-REFERENCE TO RELATED APPLICATION

The present application claims priority to Chinese Patent Application No. 202410323423.0, filed on March 20, 2024, and entitled "DRYING STATE PREDICTION METHOD FOR ELECTRODE PLATE AND DRYING STATE PREDICTION DEVICE FOR ELECTRODE PLATE", the content of which is incorporated herein by reference in its entirety.

### TECHNICAL FIELD

The present application relates to the field of battery manufacturing, and in particular, to a drying state prediction method and drying state prediction device for an electrode plate.

### BACKGROUND

Batteries are widely applied due to their advantages such as reliable operation performance, no pollution, and no memory effect. For example, as environmental protection issues are receiving increasing attention and new energy vehicles are becoming increasingly popular, the demand for batteries will exhibit explosive growth.

Electrode plates in a battery are an important component of the battery, and the performance of the electrode plates has a significant influence on the performance of the battery. The drying characteristics of the electrode plates have a significant influence on the performance of the electrode plates in the fabrication process, especially in the drying process. Therefore, how to predict the drying characteristics of the electrode plates in the drying process is an urgent problem to be solved in the art.

### SUMMARY

Embodiments of the present application provide a drying state prediction method and drying state prediction device for an electrode plate. The drying state prediction method according to the embodiments of the present application can effectively predict the drying characteristics of the electrode plate during the drying process and can improve the prediction precision.

In a first aspect, the embodiments of the present application provide a drying state prediction method for an electrode plate. The method includes: separately drying an electrode plate to be tested under a plurality of drying parameters, where when a mass at an Nth moment and a mass at an (N-1)th moment of the electrode plate to be tested during a drying treatment process satisfy a preset threshold, the electrode plate to be tested is dried into a dry electrode plate; acquiring electrode plate data of the electrode plate to be tested corresponding to different moments during the drying treatment process, and constructing corresponding models between the moments and the electrode plate data under the plurality of drying parameters respectively; and determining a target data set corresponding to a target time under at least two of the plurality of drying parameters based on the corresponding models respectively corresponding to the plurality of drying parameters, where the target data set includes a plurality of pieces of first target electrode plate data and a plurality of pieces of second target electrode plate data, the first target electrode plate data and the second target electrode plate data are respectively located in different corresponding models, the plurality of pieces of first target electrode plate data respectively correspond to a plurality of first target moments in the target time, and the plurality of pieces of second target electrode plate data respectively correspond to a plurality of second target moments in the target time.

Therefore, according to the drying state prediction method for an electrode plate of the embodiments of the present application, the electrode plate data of the electrode plate to be tested during the drying treatment process are acquired, and the corresponding models of the moments and the electrode plate data of the electrode plate to be tested during the drying treatment process are constructed; the corresponding models of the electrode plate to be tested under different drying parameters can be constructed by separately performing the drying treatment under the different drying parameters. The sequential drying states of the electrode plate to be tested under the plurality of drying parameters can be predicted by the above constructed corresponding models. The accuracy of the above prediction method is high, which is conducive to guiding the optimization of the process parameters in the drying process.

In some embodiments, the step of acquiring the electrode plate data of the electrode plate to be tested corresponding to the different moments during the drying treatment process, and constructing the corresponding models between the moments and the electrode plate data under the plurality of drying parameters respectively includes: acquiring a plurality of pieces of sub-data of the electrode plate to be tested corresponding to the different moments during the drying treatment process, where the electrode plate data includes the plurality of pieces of sub-data; and constructing sub-models of the moments and the sub-data under the plurality of drying parameters respectively, where the corresponding model includes a plurality of sub-models.

Therefore, in the embodiments of the present application, by acquiring the plurality of pieces of sub-data and separately constructing the plurality of sub-models, the drying state can be more comprehensively predicted, thereby improving the accuracy of the prediction.

In some embodiments, the step of acquiring the electrode plate data of the electrode plate to be tested corresponding to the different moments during the drying treatment process, and constructing the corresponding models between the moments and the electrode plate data under the plurality of drying parameters respectively includes: acquiring electrode plate temperature data of the electrode plate to be tested corresponding to the different moments during the drying treatment process, where the electrode plate data includes the electrode plate temperature data; constructing temperature models of the moments and the electrode plate temperature data under the plurality of drying parameters respectively, where the corresponding model includes the temperature models; acquiring electrode plate mass data of the electrode plate to be tested corresponding to the different moments during the drying treatment process, where the electrode plate data includes the electrode plate mass data; and constructing mass models of the moments and the electrode plate mass data under the plurality of drying parameters respectively, where the corresponding model includes the mass models.

Therefore, in the embodiments of the present application, the electrode plate data includes the electrode plate temperature data and the electrode plate mass data. By monitoring the temperature, mass, and the like of the electrode plate, the drying state of the electrode plate can be effectively predicted based on the temperature and mass changes. In addition, monitoring the temperature, mass, and the like of the electrode plate separately can simplify the test operation and improve the test precision.

In some embodiments, the step of acquiring the electrode plate temperature data of the electrode plate to be tested corresponding to the different moments during the drying treatment process includes: acquiring electrode plate temperature data of a same electrode plate to be tested at a plurality of moments during the drying treatment process separately.

Therefore, in the embodiments of the present application, the accuracy of temperature measurement can be improved by acquiring the electrode plate temperature data of the same electrode plate to be tested during the drying treatment process.

In some embodiments, the step of acquiring the electrode plate mass data of the electrode plate to be tested corresponding to the different moments during the drying treatment process includes: acquiring different electrode plates to be tested at a plurality of moments during the drying treatment process respectively, and measuring electrode plate mass data corresponding to each moment, where a plurality of electrode plates to be tested are provided.

Therefore, in the embodiments of the present application, by acquiring the electrode plate mass data of different electrode plates to be tested with the same specification during the drying treatment process, the accuracy of mass measurement can be improved, and the interference of mass measurement on the drying state of the electrode plate, which affects the accuracy of the mass measurement results, can be reduced.

In some embodiments, a time interval between any two adjacent moments of the plurality of moments is the same. The same time interval facilitates model construction and can improve the precision of model fitting.

In some embodiments, the step of acquiring the electrode plate data of the electrode plate to be tested corresponding to the different moments during the drying treatment process, and constructing the corresponding models between the moments and the electrode plate data under the plurality of drying parameters respectively includes: acquiring test parameters of a plurality of regions of the electrode plate to be tested corresponding to the different moments during the drying treatment process; and calculating an average value of the test parameters of the plurality of regions as the electrode plate data corresponding to each moment.

Therefore, in the embodiments of the present application, by acquiring the test parameters of the plurality of regions corresponding to each moment and using the average value of the test parameters of the plurality of regions as the electrode plate data corresponding to each moment, the acquisition accuracy of the electrode plate data can be improved, thereby further improving the prediction precision of the drying state of the electrode plate.

In some embodiments, the step of determining the target data set corresponding to the target time under the at least two of the plurality of drying parameters based on the corresponding models respectively corresponding to the plurality of drying parameters includes: determining a first target data set corresponding to a first target time based on the corresponding model corresponding to one of the plurality of drying parameters, where the first target data set includes a plurality of pieces of first target electrode plate data, and the plurality of pieces of first target electrode plate data correspond to a plurality of first target moments in the first target time respectively; recording an end point moment of the first target time as a first end point moment, and determining first end point electrode plate data corresponding to the first end point moment; determining a moment corresponding to the first end point electrode plate data as a first start moment based on the corresponding model corresponding to another of the plurality of drying parameters; and determining a second target data set corresponding to a second target time, where the second target data set includes a plurality of pieces of second target electrode plate data, the plurality of pieces of second target electrode plate data correspond to a plurality of second target moments in the second target time respectively, and the second target moment is determined based on the first start moment and a time interval from the first start moment.

In some embodiments, the step of providing the electrode plate to be tested includes: providing a current collector; and disposing a slurry coating on the current collector to form the electrode plate to be tested, where the electrode plate to be tested includes coating parameters of the slurry coating;
the step of acquiring the electrode plate data of the electrode plate to be tested corresponding to the different moments during the drying treatment process, and constructing the corresponding models between the moments and the electrode plate data under the plurality of drying parameters respectively includes: acquiring the electrode plate data of the electrode plate to be tested corresponding to the different moments during the drying treatment process; and constructing the corresponding models between the moments and the electrode plate data under the plurality of drying parameters respectively, where the corresponding models correspond to the coating parameters.

Therefore, in the embodiments of the present application, by respectively constructing the corresponding models under the plurality of drying parameters, the drying characteristics of the same electrode plate to be tested requiring drying under the plurality of drying parameters can be effectively predicted.

In a second aspect, the embodiments of the present application provide a drying state prediction device for an electrode plate. The device includes a providing module, a drying module, a construction module, and a prediction module. The providing module is configured to provide an electrode plate to be tested. The drying module is configured to separately dry the electrode plate to be tested under a plurality of drying parameters, where when a mass at an Nth moment and a mass at an (N-1)th moment of the electrode plate to be tested during a drying treatment process satisfy a preset threshold, the electrode plate to be tested is dried into a dry electrode plate. The construction module is configured to acquire electrode plate data of the electrode plate to be tested corresponding to different moments during the drying treatment process, and construct corresponding models between the moments and the electrode plate data under the plurality of drying parameters respectively. The prediction module is configured to determine a target data set corresponding to a target time under at least two of the plurality of drying parameters based on the corresponding models respectively corresponding to the plurality of drying parameters, where the target data set includes a plurality of pieces of first target electrode plate data and a plurality of pieces of second target electrode plate data, the first target electrode plate data and the second target electrode plate data are respectively located in different corresponding models, the plurality of pieces of first target electrode plate data respectively correspond to a plurality of first target moments in the target time, and the plurality of pieces of second target electrode plate data respectively correspond to a plurality of second target moments in the target time.

Therefore, in the embodiments of the present application, the drying state prediction device for an electrode plate can effectively predict the sequential drying states of the electrode plate to be tested under the plurality of drying parameters; the prediction accuracy is high, which is conducive to guiding the optimization of the process parameters in the drying process.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic flowchart of a drying state prediction method for an electrode plate according to an embodiment of the present application;
FIG. 2 is a schematic flowchart of step S300 in a drying state prediction method for an electrode plate according to an embodiment of the present application;
FIG. 3 is a schematic flowchart of step S300 in a drying state prediction method for an electrode plate according to another embodiment of the present application;
FIG. 4 is a schematic flowchart of step S400 in a drying state prediction method for an electrode plate according to another embodiment of the present application;
FIG. 5 is a schematic structural diagram of a drying state prediction device for an electrode plate according to an embodiment of the present application;
FIG. 6 is a schematic structural diagram of a construction module in a drying state prediction device for an electrode plate according to an embodiment of the present application; and
FIG. 7 is a schematic structural diagram of a prediction module in a drying state prediction device for an electrode plate according to an embodiment of the present application.

Reference numerals in the drawings are explained as follows:
1. drying state prediction device;
10. providing module;
20. drying module;
30. construction module; 31. temperature acquisition module; 32. temperature model construction module; 33. mass acquisition module; 34. mass model construction module,
40: prediction module; 41: first prediction module; 42: first determination module; 43: second determination module; 44: second prediction module.

### DETAILED DESCRIPTION

Hereinafter, embodiments of the drying state prediction method for an electrode plate and the drying state prediction device for an electrode plate of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Furthermore, the drawings and the following descriptions are provided to enable those skilled in the art to fully understand the present application and are not intended to limit the subject matter recited in the claims.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Furthermore, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers within the range of "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps S of the present application can be performed sequentially or randomly, preferably sequentially. For example, if the method includes steps S(a) and S(b), it indicates that the method may include steps S(a) and S(b) performed sequentially or steps S(b) and S(a) performed sequentially. For example, if the mentioned method may further include step S(c), it indicates that step S(c) may be added to the method in any order; for example, the method may include steps S(a), S(b), and S(c), or steps S(a), S(c), and S(b), or steps S(c), S(a), and S(b), or the like.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In addition, the technical terms "first", "second", and the like are used for description only and are not to be construed as indicating or implying relative importance or to implicitly indicate the number of technical features indicated. In the description of the embodiments of the present application, unless otherwise specifically defined, "a plurality of" means two or more.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the embodiments of the present application, the terms "a plurality of" and "multiple" mean two or more.

In the embodiments of the present application, battery cells may include lithium-ion secondary battery cells, lithium-ion primary battery cells, lithium-sulfur battery cells, sodium-lithium-ion battery cells, sodium-ion battery cells, magnesium-ion battery cells, etc., which are not limited in the embodiments of the present application. The battery cell may be cylindrical, flat, rectangular parallelepiped-shaped, or in other shapes. This is also not limited in the embodiments of the present application. According to the packaging method, the battery cells are typically divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case configured to encapsulate one or more battery cells. The case can prevent liquid or other foreign matter from affecting the charging or discharging of the battery cells.

A battery cell includes a housing assembly, an electrode assembly, and an electrolytic solution, and the electrode assembly includes a positive electrode plate, a negative electrode plate, and a separator. The battery cell primarily works by the movement of metal ions between the positive electrode plate and the negative electrode plate by means of the electrolytic solution.

The fabrication process of the battery cell includes an electrode plate manufacturing process, an assembly process, and a post-liquid injection process. The electrode plate fabrication process includes a mixing process, a coating process, a drying process, a rolling process, and the like. The coating process is to coat the current collector with a uniformly stirred slurry from the mixing process, and after the coating, a drying procedure is required to heat the electrode plate to remove the solvent and the like in the slurry. The drying process of the electrode plate mainly includes two stages. The first stage is the "surface evaporation stage". The solvent evaporates on the surface of the electrode plate, and the electrode plate continuously contracts. When the solid particles of the active material reach the maximum bulk density, the electrode plate stops contracting, and the surface evaporation stage ends when the moisture content of the electrode plate reaches the critical moisture content. The second stage is the "internal diffusion stage", where the evaporation surface descends to the interior of the coating. Under the action of capillary force and osmotic pressure, the solvent inside the coating diffuses outward from the interior of the electrode plate, and drying ends when the moisture content of the electrode plate reaches the equilibrium moisture content. The drying process plays an important role in the quality, the service life, and the like of the electrode plate. For example, the solvent removal rate and the drying temperature directly affect the rheological properties and the like of the coating slurry.

In the related art, the drying process of the electrode plate typically requires continuous drying in a multi-section oven. The state of the electrode plate in each section of the oven is difficult to monitor in real time, and the drying state of the electrode plate cannot be effectively estimated or determined. The mass of the dry electrode plate is mainly evaluated based on experience.

In view of this, the embodiments of the present application provide a drying state prediction method for an electrode plate. According to the method, an electrode plate to be tested is dried into a dry electrode plate during the drying treatment process, the electrode plate data during the drying treatment process are tested, the corresponding models of moments and the electrode plate data are constructed, and the drying state of the electrode plate can be predicted based on the corresponding models, with high prediction accuracy.

The embodiments of the present application provide a drying state prediction method for an electrode plate.

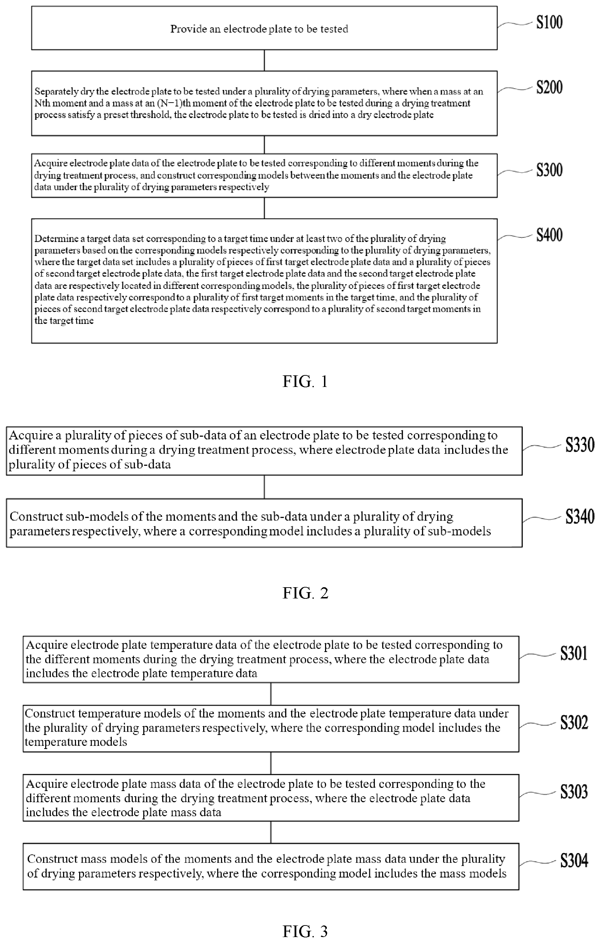

As shown in FIG. 1, the drying state prediction method for an electrode plate includes:
In step S100, an electrode plate to be tested is provided.
In step S200, the electrode plate to be tested is separately dried under a plurality of drying parameters, where when the mass at the Nth moment and the mass at the (N-1)th moment of the electrode plate to be tested during a drying treatment process satisfy a preset threshold, the electrode plate to be tested is dried into a dry electrode plate.
In step S300, the electrode plate data of the electrode plate to be tested corresponding to different moments during the drying treatment process are acquired, and corresponding models between the moments and the electrode plate data are constructed under the plurality of drying parameters respectively.
In step S400, a target data set corresponding to a target time under at least two of the plurality of drying parameters is determined based on the corresponding models respectively corresponding to the plurality of drying parameters, where the target data set includes a plurality of pieces of first target electrode plate data and a plurality of pieces of second target electrode plate data, the first target electrode plate data and the second target electrode plate data are respectively located in different corresponding models, the plurality of pieces of first target electrode plate data respectively correspond to a plurality of first target moments in the target time, and the plurality of pieces of second target electrode plate data respectively correspond to a plurality of second target moments in the target time.

According to the drying state prediction method for an electrode plate of the embodiments of the present application, the electrode plate data of the electrode plate to be tested during the drying treatment process are acquired, and the corresponding models of the moments and the electrode plate data of the electrode plate to be tested during the drying treatment process are constructed; the corresponding models of the electrode plate to be tested under different drying parameters can be constructed by separately performing the drying treatment under the different drying parameters. The sequential drying states of the electrode plate to be tested under the plurality of drying parameters can be predicted by the above constructed corresponding models. The accuracy of the above prediction method is high, which is conducive to guiding the optimization of the process parameters in the drying process.

### [Step S100]

An electrode plate to be tested is provided.

In the embodiments of the present application, the electrode plate to be tested refers to an electrode plate provided with a slurry coating. The slurry coating contains a volatilizable substance such as a solvent, and the solvent and the like volatilize in the drying process, such that the slurry coating forms an active substance layer.

In some embodiments, step S100 may include:
In step S110, a current collector is provided.
In step S120, a slurry coating is disposed on the current collector to form the electrode plate to be tested, where the electrode plate to be tested includes the coating parameters of the slurry coating.

In the embodiments of the present application, the coating parameters may include the coating quality, the coating density, and the like of the slurry coating. In the embodiments of the present application, the electrode plates to be tested with different coating parameters may be separately tested by replacing the electrode plates to be tested, so as to predict the drying states of the electrode plates under different coating parameters.

Corresponding to the above steps, step S300 may include: constructing the corresponding models between the moments and the electrode plate data under the plurality of drying parameters respectively, where the corresponding models correspond to the coating parameters.

### [Step S200]

The electrode plate to be tested is separately dried under a plurality of drying parameters, where when the mass at the Nth moment and the mass at the (N-1)th moment of the electrode plate to be tested during a drying treatment process satisfy a preset threshold, the electrode plate to be tested is dried into a dry electrode plate.

Drying the electrode plate to be tested into the dry electrode plate, and separately drying the electrode plate to be tested under the plurality of drying parameters means that a plurality of electrode plates to be tested can be taken, and a part of the electrode plates to be tested can be dried into a dry electrode plate under the same drying parameter; another part of the electrode plates to be tested can be dried into a dry electrode plate under another drying parameter; yet another part of the electrode plates to be tested can be dried into a dry electrode plate under yet another drying parameter. In other words, under the same drying parameter, the electrode plate to be tested needs to be dried into a dry electrode plate; then the drying parameter is changed, and other electrode plates to be tested are dried into dry electrode plates under the changed drying parameter.

In the related art, the drying process of the electrode plate typically needs to be performed in a multi-section oven. Specifically, the electrode plate sequentially passes through a plurality of oven sections for drying during the transfer process, and the drying conditions of each oven are different, such that the drying state of the dry electrode plate in each oven is difficult to monitor and predict.

In the embodiments of the present application, to predict the drying state of the electrode plate, the electrode plate to be tested is placed in the same oven and allowed to stand for drying until the electrode plate to be tested is dried into a dry electrode plate. Under this drying environment, it is easy to accurately acquire the electrode plate data during the drying process. During the drying process of the electrode plate to be tested, due to the volatilization of the solvent and the like, the mass of the electrode plate to be tested gradually decreases, manifesting as weight loss. In the case that the solvent in the electrode plate to be tested is substantially completely volatilized, the electrode plate to be tested gradually approaches a state of complete drying, and the mass change of the electrode plate to be tested is relatively small. The electrode plate to be tested after the drying is completed is defined as a dry electrode plate.

When the mass at the Nth moment and the mass at the (N-1)th moment of the electrode plate to be tested during the drying treatment process satisfy the preset threshold, the electrode plate to be tested at the Nth moment is determined as the electrode plate to be tested after the drying is completed, that is, the dry electrode plate. Optionally, the preset threshold may be a weight loss rate or a difference. For example, the weight loss rate of the electrode plate to be tested between the Nth moment and the (N-1)th moment is calculated as (the mass of the electrode plate to be tested at the (N-1)th moment minus the mass at the Nth moment)/the mass of the electrode plate to be tested at the (N-1)th moment. The weight loss rate is ≤ 1%, that is, the drying ends when the weight loss rate of the electrode plate to be tested is ≤ 1%. N represents a positive number, and N-1 represents a positive number.

The drying parameters may include the drying temperature and the like. For example, when hot air is used for drying, the drying parameters may include the temperature of the hot air, the wind speed of the hot air, and the like.

The electrode plate to be tested is dried into a dry electrode plate under the same drying parameter, and the electrode plate data of the electrode plate to be tested during the drying treatment process are acquired. The drying parameter is changed; the electrode plate to be tested is dried into a dry electrode plate under another drying parameter, and the electrode plate data of the electrode plate to be tested during the drying treatment process are acquired. By testing the drying treatment processes under different drying parameters, the drying treatment states of the electrode plate to be tested under different drying parameters can be acquired, thereby facilitating the prediction of the drying states of the electrode plate during the different drying treatment processes.

For example, the electrode plate to be tested is dried under a first drying parameter (e.g., an air temperature of 110 °C and an air speed of 2.1 m/s), and the relevant data of the drying state of the electrode plate to be tested under the first drying parameter are acquired. Another batch of electrode plates to be tested is taken, where the electrode plates to be tested and the above electrode plates to be tested have the same specification (e.g., the same coating parameter). The electrode plates to be tested are dried under a second drying parameter (e.g., an air temperature of 110 °C and an air speed of 7.4 m/s), and the relevant data of the drying state of the electrode plates to be tested under the second drying parameter are acquired.

Before drying, the electrode plate to be tested is dried after the drying parameters (e.g., air speed and air temperature) in the oven are stabilized. For example, the electrode plate to be tested is dried after the air speed and air temperature in the oven are stabilized.

### [Step S300]

The electrode plate data of the electrode plate to be tested corresponding to different moments during the drying treatment process are acquired, and corresponding models between the moments and the electrode plate data are constructed under the plurality of drying parameters respectively.

In some embodiments, step S300 may include:
In step S310, the test parameters of a plurality of regions of the electrode plate to be tested corresponding to the different moments during the drying treatment process are acquired.
In step S320, the average value of the test parameters of the plurality of regions is calculated as the electrode plate data corresponding to each moment.

By acquiring the test parameters of the plurality of regions corresponding to each moment and using the average value of the test parameters of the plurality of regions as the electrode plate data corresponding to each moment, the acquisition accuracy of the electrode plate data can be improved, thereby further improving the prediction precision of the drying state of the electrode plate.

A drying region may be selected from the plurality of regions. For example, the drying is performed in an oven using a rectangular air nozzle, and the air nozzle affects the central region of the electrode plate. The central region may be a region extending a certain dimension, e.g., 50 µm, from the center line of the electrode plate to both sides, and a plurality of portions of the central region are selected as the plurality of regions.

As shown in FIG. 2, in some embodiments, step S300 may include:
In step S330, a plurality of pieces of sub-data of the electrode plate to be tested corresponding to the different moments during the drying treatment process are acquired, where the electrode plate data includes the plurality of pieces of sub-data.
In step S340, sub-models of the moments and the sub-data are constructed under the plurality of drying parameters respectively, where the corresponding model includes a plurality of sub-models.

The electrode plate data may include a plurality of pieces of sub-data, and accordingly, each piece of sub-data can be used to construct a sub-model with the moment. By acquiring the plurality of pieces of sub-data and separately constructing the plurality of sub-models, the drying state can be more comprehensively predicted, thereby improving the accuracy of the prediction. The plurality of pieces of sub-data may include electrode plate temperature data and electrode plate mass data. By monitoring the temperature, mass, and the like of the electrode plate, the drying state of the electrode plate can be effectively predicted based on the temperature and mass changes. In addition, monitoring the temperature, mass, and the like of the electrode plate separately can simplify the test operation and improve the test precision.

As shown in FIG. 3, optionally, step S300 may include:
In step S301, the electrode plate temperature data of the electrode plate to be tested corresponding to the different moments during the drying treatment process are acquired, where the electrode plate data includes the electrode plate temperature data.
In step S302, temperature models of the moments and the electrode plate temperature data under the plurality of drying parameters are constructed respectively, where the corresponding model includes the temperature models.

The temperature model can be understood as a model that the temperature of the electrode plate to be tested changes over time during the drying treatment process, and can characterize the temperature change state of the electrode plate to be tested.

Optionally, step S301 may include: acquiring the electrode plate temperature data of the same electrode plate to be tested at a plurality of moments during the drying treatment process separately, which can improve the accuracy of temperature measurement.

Specifically, a temperature sensor may be disposed on the electrode plate to be tested, and the electrode plate temperature data of the electrode plate to be tested are acquired by the temperature sensor. During the drying treatment process, the electrode plate to be tested does not need to be replaced, and the temperature of the electrode plate to be tested can be acquired in real time by the temperature sensor. To further improve the accuracy of data acquisition, temperature sensors may be respectively disposed in a plurality of regions of the same electrode plate to be tested, and the temperatures acquired by the plurality of temperature sensors at the same moment are averaged to obtain the electrode plate temperature data.

The arrangement of the plurality of regions may be flexibly adjusted based on production. For example, three regions, four regions, five regions, or the like may be provided, each region may be provided with one temperature sensor, and the spacing between the regions may be the same.

Optionally, step S300 may further include:
In step S303, the electrode plate mass data of the electrode plate to be tested corresponding to the different moments during the drying treatment process are acquired, where the electrode plate data includes the electrode plate mass data.
In step S304, mass models of the moments and the electrode plate mass data are constructed under the plurality of drying parameters respectively, where the corresponding model includes the mass models.

The mass model can be understood as a model that the mass of the electrode plate to be tested changes over time during the drying treatment process, which can characterize the mass change state of the electrode plate to be tested and indicates the weight loss state of the electrode plate to be tested along with the volatilization of the solvent in the electrode plate to be tested.

The mass measurement of the electrode plate to be tested can be monitored in an oven. For example, the electrode plate to be tested is placed in a weighing device, and the electrode plate to be tested and the weighing device are both placed in the oven. The mass of the electrode plate to be tested during the drying treatment process can be acquired in real time by the weighing device. To further improve the accuracy of data acquisition, weighing devices may be respectively disposed on different electrode plates to be tested, and the masses acquired by a plurality of weighing devices at the same moment are averaged to obtain the electrode plate mass data.

The mass measurement of the electrode plate to be tested can be performed outside the oven. The environmental conditions (e.g., temperature) outside the oven are different from the drying conditions (e.g., temperature) inside the oven. The environmental conditions outside the oven may cause the temperature of the electrode plate to be tested to decrease. If the electrode plate to be tested after mass measurement is moved back into the oven to continue drying, the data change of the electrode plate to be tested during the drying process cannot accurately reflect the data change of the electrode plate to be tested under the same drying parameter.

In the embodiments of the present application, a plurality of electrode plates to be tested may be provided, and step S303 may include: acquiring different electrode plates to be tested respectively at a plurality of moments during the drying treatment process, and measuring electrode plate mass data corresponding to each moment. By acquiring the electrode plate mass data of different electrode plates to be tested with the same specification during the drying treatment process, the accuracy of mass measurement can be improved, and the interference of mass measurement on the drying state of the electrode plate, which affects the accuracy of the mass measurement results, can be reduced.

Optionally, a time interval between any two adjacent moments in the plurality of moments is the same. In other words, a time interval between one of the plurality of moments and a previous moment is a first interval, a time interval between one of the plurality of moments and a next moment is a second interval, and the first interval is the same as the second interval. For example, the plurality of moments include a first moment, a second moment, and a third moment. A time interval between the second moment and the first moment is the same as a time interval between the third moment and the second moment. The same time interval facilitates model construction and can improve the precision of model fitting.

For example, M electrode plates to be tested are provided, and M is a positive integer greater than 1. The specifications, for example, the coating parameters, of the M electrode plates to be tested are the same. For example, the masses of the electrode plates to be tested before drying are the same. The drying parameters of the M electrode plates to be tested being the same can be understood as that the M electrode plates to be tested are dried under the same drying condition.

The first electrode plate to be tested among the M electrode plates to be tested is taken, and the mass of the electrode plate to be tested before drying is recorded as m₁; after the electrode plate to be tested is placed in an oven and dried for a time interval Δt, the electrode plate to be tested is taken out and its mass is measured as m_{1-Δt}, and the moment is recorded as Δt;
the second electrode plate to be tested among the M electrode plates to be tested is taken, and the mass of the electrode plate to be tested before drying is recorded as m₂; after the electrode plate to be tested is placed in an oven and dried for a time interval 2Δt, the electrode plate to be tested is taken out and its mass is measured as m_{2-2Δt}, and the moment is recorded as 2Δt;
the Pth electrode plate to be tested among the M electrode plates to be tested is taken, and the mass of the electrode plate to be tested before drying is recorded as mₚ; after the electrode plate to be tested is placed in an oven and dried for a time interval pΔt, the electrode plate to be tested is taken out and its mass is measured as m_{p-pΔt}, and the moment is recorded as pΔ t; P < M, where P is a positive integer.

The (P+1)th electrode plate to be tested among the M electrode plates to be tested is taken, and the mass of the electrode plate to be tested before drying is recorded as mₚ₊₁; after the electrode plate to be tested is placed in an oven and dried for a time interval (p+1)Δt, the electrode plate to be tested is taken out and its mass is measured as m_{(p+1)*(1-Δt)}, and the moment is recorded as (p+1)Δt, where m_{(p+1)*(1-Δt)} and m_{p-pΔt} satisfy a preset threshold, for example, the weight loss rate is ≤ 1%. In this case, the electrode plate to be tested with a mass of m_{(p+1)*(1-Δt)} is a dry electrode plate.

The mass models corresponding to the moments and the electrode plate mass data are constructed based on the plurality of moments and the electrode plate mass data corresponding to each moment recorded above.

### [Step S400]

A target data set corresponding to a target time under at least two of the plurality of drying parameters is determined based on the corresponding models respectively corresponding to the plurality of drying parameters.

The electrode plate generally needs to be dried sequentially in a multi-section oven, and the drying parameters set in each section of the oven are different. In the embodiments of the present application, by respectively constructing the corresponding models under the plurality of drying parameters by means of the above steps, the drying characteristics of the same electrode plate to be tested requiring drying under the plurality of drying parameters can be predicted. Certainly, the drying characteristics of the electrode plate having the same coating parameters as the electrode plate to be tested can also be predicted.

For example, the electrode plate needs to be dried in a six-section oven, and different drying parameters are respectively set in the six sections of the oven; or, for example, the electrode plate needs to be dried in a two-section oven, and different drying parameters are set in the two sections of the oven.

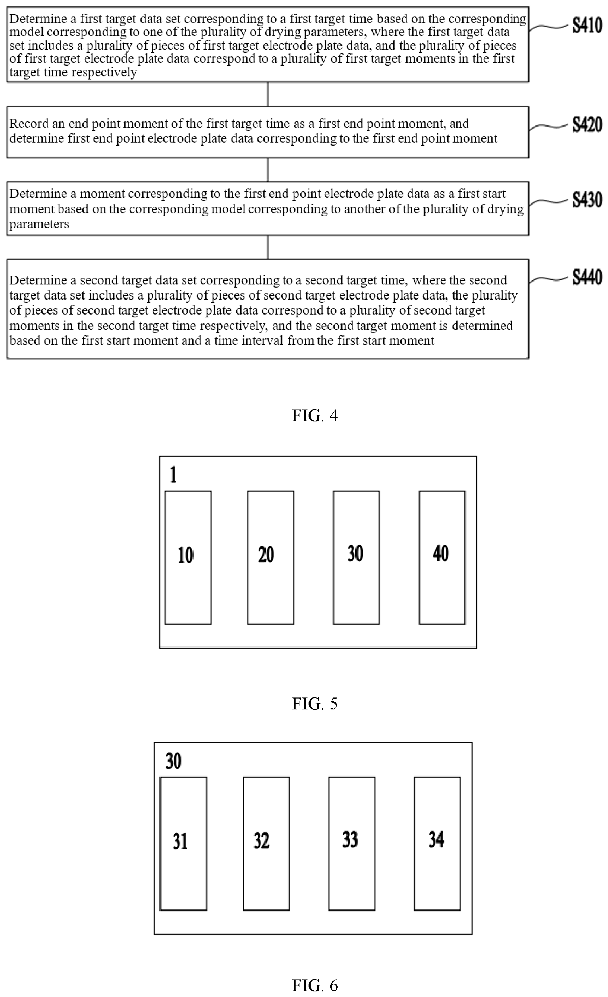

As shown in FIG. 4, specifically, step S400 may include:
In step S410, a first target data set corresponding to a first target time is determined based on the corresponding model corresponding to one of the plurality of drying parameters, where the first target data set includes a plurality of pieces of first target electrode plate data, and the plurality of pieces of first target electrode plate data correspond to a plurality of first target moments in the first target time respectively.

The first target time is a time period, which specifically refers to a time period composed of a plurality of first target moments. The first target data set refers to a set composed of a plurality of pieces of first target electrode plate data. Based on the drying parameter of the first section of the oven for the electrode plate, the corresponding model corresponding to the drying parameter is determined, the corresponding model is used as a first corresponding model, and the first target data set in the first target time is determined based on the first corresponding model, such that the drying state of the electrode plate to be tested in the first section of the oven can be accurately predicted.

In step S420, the end point moment of the first target time is recorded as a first end point moment, and the first end point electrode plate data corresponding to the first end point moment is determined.

The first end point electrode plate data corresponding to the first end point moment is determined based on the first corresponding model.

In step S430, the moment corresponding to the first end point electrode plate data is determined as a first start moment based on the corresponding model corresponding to another of the plurality of drying parameters.

After the electrode plate to be tested is dried in the first section of the oven, it needs to enter the second section of the oven for drying, and the corresponding model under the drying parameter in the second section of the oven is used as a second corresponding model. The electrode plate state corresponding to the end point moment (the first end point moment) upon the completion of drying in the first section of the oven is used as the initial electrode plate state of the electrode plate to be tested for drying in the second section of the oven. Specifically, the first end point electrode plate data corresponding to the first end point moment is determined based on the first corresponding model. Based on the second corresponding model, the moment corresponding to the first end point electrode plate data is determined as the start moment in the second section of the oven, i.e., a second start moment.

In step S440, a second target data set corresponding to a second target time is determined, where the second target data set includes a plurality of pieces of second target electrode plate data, the plurality of pieces of second target electrode plate data correspond to a plurality of second target moments in the second target time respectively, and the second target moment is determined based on the first start moment and a time interval from the first start moment.

The second target time is a time period, which specifically refers to a time period composed of a plurality of second target moments. Since the start moment in the second section of the oven is not zero and is the second start moment, the second target moment can be determined based on the second start moment and the second target time. For example, if the second start moment is 20 min and the second target time is 30 min, the second target moment corresponds to any moment from (20 + 0) min to (20 + 30) min, that is, corresponds to any moment from 20 min to 50 min.

The second target data set refers to a set composed of a plurality of pieces of second target electrode plate data. Based on the second corresponding model in the second section of the oven, the second target electrode plate data corresponding to each second target moment in the second target time is determined, such that the drying state of the electrode plate to be tested in the second section of the oven can be accurately predicted.

The electrode plate can be dried in a two-section oven and can also be dried in an oven with more sections. When the electrode plate is dried in an oven with more sections, the prediction steps of the drying state are the same as steps S420 to S440, and details are not described herein again.

For example, a target data set corresponding to the target time under three of the plurality of drying parameters is determined based on the corresponding models respectively corresponding to the plurality of drying parameters. The target data set includes a plurality of pieces of first target electrode plate data, a plurality of pieces of second target electrode plate data, and a plurality of pieces of third target electrode plate data. The first target electrode plate data, the second target electrode plate data, and the third target electrode plate data are respectively located in different corresponding models. The plurality of pieces of first target electrode plate data respectively correspond to a plurality of first target moments in the target time, the plurality of pieces of second target electrode plate data respectively correspond to a plurality of second target moments in the target time, and the plurality of pieces of third target electrode plate data respectively correspond to a plurality of third target moments in the target time.

In some embodiments, after step S100, the drying state prediction method for an electrode plate may further include step S500 of sealing the electrode plate to be tested.

Before the drying treatment, the electrode plate to be tested is subjected to sealing treatment, which reduces the risk of inaccurate electrode plate data measurement caused by volatilization of the solvent and the like before the drying treatment, and can improve the accuracy of the electrode plate data measurement.

Specifically, the surface of the electrode plate to be tested may be provided with plastic wrap, a sealing bag, or the like for sealing treatment.

As a specific embodiment of the present application, the drying state prediction method for an electrode plate may include:
providing a current collector;
disposing a slurry coating on the current collector to form the electrode plate to be tested, where the electrode plate to be tested includes the coating parameters of the slurry coating;
separately drying the electrode plate to be tested under a plurality of drying parameters into a dry electrode plate, where the mass of the electrode plate to be tested at the Nth moment during the drying treatment process and the mass of the dry electrode plate satisfy a preset threshold;
acquiring the electrode plate temperature data of the electrode plate to be tested corresponding to different moments during the drying treatment process, where the electrode plate data includes the electrode plate temperature data;
constructing temperature models of the moments and the electrode plate temperature data under the plurality of drying parameters respectively, where the corresponding model includes the temperature models;
acquiring the electrode plate mass data of the electrode plate to be tested corresponding to the different moments during the drying treatment process, where the electrode plate data includes the electrode plate mass data; and
constructing mass models of the moments and the electrode plate mass data under the plurality of drying parameters respectively, where the corresponding model includes the mass models.

A first target data set corresponding to a first target time is determined based on the corresponding model corresponding to one of the plurality of drying parameters, where the first target data set includes a plurality of pieces of first target electrode plate data, and the plurality of pieces of first target electrode plate data correspond to a plurality of first target moments in the first target time respectively;
the end point moment of the first target time is recorded as a first end point moment, and the first end point electrode plate data corresponding to the first end point moment is determined based on the corresponding model corresponding to one of the plurality of drying parameters;
the moment corresponding to the first end point electrode plate data is determined as a first start moment based on the corresponding model corresponding to another of the plurality of drying parameters;
a second target data set corresponding to a second target time is determined based on the corresponding model corresponding to another of the plurality of drying parameters, where the second target data set includes a plurality of pieces of second target electrode plate data, the plurality of pieces of second target electrode plate data correspond to a plurality of second target moments in the second target time respectively, and the second target moment is determined based on the first start moment and the second target time.

The embodiments of the present application further provide a drying state prediction device for an electrode plate. The drying state prediction device for an electrode plate can be configured to perform the drying state prediction method for an electrode plate according to any one of the above embodiments of the present application.

As shown in FIG. 5, the drying state prediction device 1 for an electrode plate includes a providing module 10, a drying module 20, a construction module 30, and a prediction module 40. The providing module 10 is configured to provide an electrode plate to be tested. The drying module 20 is configured to separately dry the electrode plate to be tested under a plurality of drying parameters, where when the mass at the Nth moment and the mass at the (N-1)th moment of the electrode plate to be tested during a drying treatment process satisfy a preset threshold, the electrode plate to be tested is dried into a dry electrode plate. The construction module 30 is configured to acquire the electrode plate data of the electrode plate to be tested corresponding to different moments during the drying treatment process, and construct corresponding models between the moments and the electrode plate data under the plurality of drying parameters respectively. The prediction module 40 is configured to determine a target data set corresponding to a target time under at least two of the plurality of drying parameters based on the corresponding models respectively corresponding to the plurality of drying parameters, where the target data set includes a plurality of pieces of first target electrode plate data and a plurality of pieces of second target electrode plate data, the first target electrode plate data and the second target electrode plate data are respectively located in different corresponding models, the plurality of pieces of first target electrode plate data respectively correspond to a plurality of first target moments in the target time, and the plurality of pieces of second target electrode plate data respectively correspond to a plurality of second target moments in the target time.

The above drying state prediction device 1 for an electrode plate can effectively predict the sequential drying states of the electrode plate to be tested under the plurality of drying parameters; the prediction accuracy is high, which is conducive to guiding the optimization of the process parameters in the drying process.

As shown in FIG. 6, in some embodiments, the construction module 30 includes a temperature acquisition module 31, a temperature model construction module 32, a mass acquisition module 33, and a mass model construction module 34. The temperature acquisition module 31 is configured to acquire the electrode plate temperature data of the electrode plate to be tested corresponding to the different moments during the drying treatment process, where the electrode plate data includes the electrode plate temperature data. The temperature model construction module 32 is configured to construct temperature models of the moments and the electrode plate temperature data under the plurality of drying parameters respectively, where the corresponding model includes the temperature models. The mass acquisition module 33 is configured to acquire the electrode plate mass data of the electrode plate to be tested corresponding to the different moments during the drying treatment process, where the electrode plate data includes the electrode plate mass data. The mass model construction module 34 is configured to construct mass models of the moments and the electrode plate mass data under the plurality of drying parameters respectively, where the corresponding model includes the mass models.

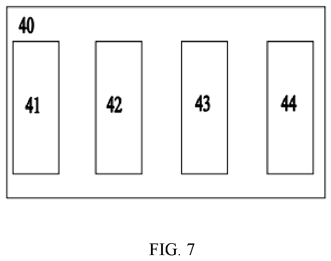

As shown in FIG. 7, in some embodiments, the prediction module 40 includes a first prediction module 41, a first determination module 42, a second determination module 43, and a second prediction module 44. The first prediction module 41 is configured to determine a first target data set corresponding to a first target time based on the corresponding model corresponding to one of the plurality of drying parameters, where the first target data set includes a plurality of pieces of first target electrode plate data, and the plurality of pieces of first target electrode plate data correspond to a plurality of first target moments in the first target time respectively. The first determination module 42 is configured to record the end point moment of the first target time as a first end point moment, and determine the first end point electrode plate data corresponding to the first end point moment. The second determination module 43 is configured to determine the moment corresponding to the first end point electrode plate data as a first start moment based on the corresponding model corresponding to another of the plurality of drying parameters. The second prediction module 44 determines a second target data set corresponding to a second target time, where the second target data set includes a plurality of pieces of second target electrode plate data, the plurality of pieces of second target electrode plate data correspond to a plurality of second target moments in the second target time respectively, and the second target moment is determined based on the first start moment and the second target time.

Although illustrative embodiments have been shown and described, it will be understood by those skilled in the art that the above embodiments are not to be construed as limiting the present application, and that changes, substitutions, and modifications can be made to the embodiments without departing from the spirit, principle, and scope of the present application.

## Claims

1. A drying state prediction method for an electrode plate, comprising:
providing an electrode plate to be tested;
separately drying the electrode plate to be tested under a plurality of drying parameters, wherein when a mass at an Nth moment and a mass at an (N-1)th moment of the electrode plate to be tested during a drying treatment process satisfy a preset threshold, the electrode plate to be tested is dried into a dry electrode plate;
acquiring electrode plate data of the electrode plate to be tested corresponding to different moments during the drying treatment process, and constructing corresponding models between the moments and the electrode plate data under the plurality of drying parameters respectively; and
determining a target data set corresponding to a target time under at least two of the plurality of drying parameters based on the corresponding models respectively corresponding to the plurality of drying parameters, wherein the target data set comprises a plurality of pieces of first target electrode plate data and a plurality of pieces of second target electrode plate data, the first target electrode plate data and the second target electrode plate data are respectively located in different corresponding models, the plurality of pieces of first target electrode plate data respectively correspond to a plurality of first target moments in the target time, and the plurality of pieces of second target electrode plate data respectively correspond to a plurality of second target moments in the target time.

2. The drying state prediction method for an electrode plate according to claim 1, wherein the step of acquiring the electrode plate data of the electrode plate to be tested corresponding to the different moments during the drying treatment process, and constructing the corresponding models between the moments and the electrode plate data under the plurality of drying parameters respectively comprises:
acquiring a plurality of pieces of sub-data of the electrode plate to be tested corresponding to the different moments during the drying treatment process, wherein the electrode plate data comprises the plurality of pieces of sub-data; and
constructing sub-models of the moments and the sub-data under the plurality of drying parameters respectively, wherein the corresponding model comprises a plurality of sub-models.

3. The drying state prediction method for an electrode plate according to claim 1 or 2, wherein the step of acquiring the electrode plate data of the electrode plate to be tested corresponding to the different moments during the drying treatment process, and constructing the corresponding models between the moments and the electrode plate data under the plurality of drying parameters respectively comprises:
acquiring electrode plate temperature data of the electrode plate to be tested corresponding to the different moments during the drying treatment process, wherein the electrode plate data comprises the electrode plate temperature data;
constructing temperature models of the moments and the electrode plate temperature data under the plurality of drying parameters respectively, wherein the corresponding model comprises the temperature models;
acquiring electrode plate mass data of the electrode plate to be tested corresponding to the different moments during the drying treatment process, wherein the electrode plate data comprises the electrode plate mass data; and
constructing mass models of the moments and the electrode plate mass data under the plurality of drying parameters respectively, wherein the corresponding model comprises the mass models.

4. The drying state prediction method for an electrode plate according to claim 3, wherein the step of acquiring the electrode plate temperature data of the electrode plate to be tested corresponding to the different moments during the drying treatment process comprises:
acquiring electrode plate temperature data of a same electrode plate to be tested at a plurality of moments during the drying treatment process separately.

5. The drying state prediction method for an electrode plate according to claim 3 or 4, wherein the step of acquiring the electrode plate mass data of the electrode plate to be tested corresponding to the different moments during the drying treatment process comprises:
acquiring different electrode plates to be tested at a plurality of moments during the drying treatment process respectively, and measuring electrode plate mass data corresponding to each moment, wherein a plurality of electrode plates to be tested are provided.

6. The drying state prediction method for an electrode plate according to claim 5, wherein a time interval between any two adjacent moments of the plurality of moments is the same.

7. The drying state prediction method for an electrode plate according to any one of claims 1 to 6, wherein the step of acquiring the electrode plate data of the electrode plate to be tested corresponding to the different moments during the drying treatment process, and constructing the corresponding models between the moments and the electrode plate data under the plurality of drying parameters respectively comprises:
acquiring test parameters of a plurality of regions of the electrode plate to be tested corresponding to the different moments during the drying treatment process; and
calculating an average value of the test parameters of the plurality of regions as the electrode plate data corresponding to each moment.

8. The drying state prediction method for an electrode plate according to any one of claims 1 to 7, wherein the step of determining the target data set corresponding to the target time under the at least two of the plurality of drying parameters based on the corresponding models respectively corresponding to the plurality of drying parameters comprises:
determining a first target data set corresponding to a first target time based on the corresponding model corresponding to one of the plurality of drying parameters, wherein the first target data set comprises a plurality of pieces of first target electrode plate data, and the plurality of pieces of first target electrode plate data correspond to a plurality of first target moments in the first target time respectively;
recording an end point moment of the first target time as a first end point moment, and determining first end point electrode plate data corresponding to the first end point moment;
determining a moment corresponding to the first end point electrode plate data as a first start moment based on the corresponding model corresponding to another of the plurality of drying parameters; and
determining a second target data set corresponding to a second target time, wherein the second target data set comprises a plurality of pieces of second target electrode plate data, the plurality of pieces of second target electrode plate data correspond to a plurality of second target moments in the second target time respectively, and the second target moment is determined based on the first start moment and a time interval from the first start moment.

9. The drying state prediction method for an electrode plate according to any one of claims 1 to 8, wherein the step of providing the electrode plate to be tested comprises:
providing a current collector; and
disposing a slurry coating on the current collector to form the electrode plate to be tested, wherein the electrode plate to be tested comprises coating parameters of the slurry coating;
the step of acquiring the electrode plate data of the electrode plate to be tested corresponding to the different moments during the drying treatment process, and constructing the corresponding models between the moments and the electrode plate data under the plurality of drying parameters respectively comprises:
acquiring the electrode plate data of the electrode plate to be tested corresponding to the different moments during the drying treatment process; and
constructing the corresponding models between the moments and the electrode plate data under the plurality of drying parameters respectively, wherein the corresponding models correspond to the coating parameters.

10. A drying state prediction device for an electrode plate, comprising:
a providing module, configured to provide an electrode plate to be tested;
a drying module, configured to separately dry the electrode plate to be tested under a plurality of drying parameters, wherein when a mass at an Nth moment and a mass at an (N-1)th moment of the electrode plate to be tested during a drying treatment process satisfy a preset threshold, the electrode plate to be tested is dried into a dry electrode plate;
a construction module, configured to acquire electrode plate data of the electrode plate to be tested corresponding to different moments during the drying treatment process, and construct corresponding models between the moments and the electrode plate data under the plurality of drying parameters respectively; and
a prediction module, configured to determine a target data set corresponding to a target time under at least two of the plurality of drying parameters based on the corresponding models respectively corresponding to the plurality of drying parameters, wherein the target data set comprises a plurality of pieces of first target electrode plate data and a plurality of pieces of second target electrode plate data, the first target electrode plate data and the second target electrode plate data are respectively located in different corresponding models, the plurality of pieces of first target electrode plate data respectively correspond to a plurality of first target moments in the target time, and the plurality of pieces of second target electrode plate data respectively correspond to a plurality of second target moments in the target time.
